# EUROPEAN PATENT SPECIFICATION

(11) **EP 3 122 079 B1**
(45) Date of publication and mention of the grant of the patent: **02.05.2018**
(21) Application number: 14886168.5
(22) Date of filing: 29.05.2014
(51) Int. Cl.: H04W 8/04, H04W 12/06, H04L 9/08, H04L 29/06, H04W 4/00, H04W 4/08, H04W 12/04, H04L 9/32, H04W 76/02

(54) **METHOD OF ESTABLISHING SMALL DATA SECURE TRANSMISSION CONNECTION FOR MTC DEVICE GROUP, AND HSS AND SYSTEM**
VERFAHREN ZUR HERSTELLUNG EINER SICHEREN KLEINDATENÜBERTRAGUNGSVERBINDUNG FÜR MTC-VORRICHTUNGSGRUPPE UND HSS UND SYSTEM
PROCÉDÉ SERVANT À ÉTABLIR UNE CONNEXION DE TRANSMISSION SÉCURISÉE DE DONNÉES DE PETITE TAILLE POUR UN GROUPE DE DISPOSITIFS D'UN RÉSEAU PRINCIPAL DE TÉLÉCOMMUNICATIONS (MTC), ET SERVEUR D'ABONNÉS DOMESTIQUES (SERVEUR HSS) ET SYSTÈME

(30) Priority: 17.03.2014 CN 201410100645
(43) Date of publication of application: 25.01.2017
(73) Proprietor: ZTE Corporation, Shenzhen, Guangdong 518057 (CN)
(72) Inventor: YU, Wantao, Shenzhen Guangdong 518057 (CN)
(74) Representative: Lavoix
(86) International application number: PCT/CN2014/078806
(87) International publication number: WO 2015/139370

(56) References cited:
- WO-A1-2012/097883
- WO-A1-2013/110224
- WO-A2-2011/152665
- CN-A- 103 096 309
- CN-A- 103 188 616
- CN-A- 103 249 030
- CN-A- 103 686 670
- "3rd Generation Partnership Project; Technical Specification Group Services and System Aspects; Security aspects of Machine-Type and other Mobile Data Applications Communications Enhancements; (Release 12)", 3GPP STANDARD; 3GPP TR 33.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.13.0, 30 April 2013 (2013-04-30), pages 1-91, XP050692482, [retrieved on 2013-04-30]
- NEC CORPORATION: "Group keys for MTC group messaging", 3GPP DRAFT; S3-130100 MTC GROUP MESSAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 January 2013 (2013-01-14), XP050685838, Retrieved from the Internet: URL:http://www.3gpp.org/ftp/tsg_sa/WG3_Sec urity/TSGS3_70_Sophia/Docs/ [retrieved on 2013-01-14]

## Description

### TECHNICAL FIELD

The disclosure relates to a Machine Type Communication (MTC) technology in the field of communications, and in particular to a method for establishing a secure small data transmission connection for an MTC device group, a Home Subscriber Server (HSS) and a system.

### BACKGROUND

MTC refers to a general term of a series of technologies and combinations thereof for implementing machine-machine and machine-man data communications and exchanges using a wireless communication technology. The MTC contains two meanings. The first meaning is a machine itself, called as an intelligent device in the embedded field. The second meaning is a machine-machine connection referring to connecting machines together via a network. The MTC is widely applied, for instance, to intelligent measurement and remote monitoring, thereby making human life more intelligent. Compared with a traditional man-man communication device, an MTC device is huge in quantity, wide in application field and great in market prospect.

In a conventional MTC system, MTC devices communicate with a service server such as an MTC server via a 3^{rd} Generation Partnership Project (3GPP) network and an external interface function entity namely an MTC Inter Working Function (MTC-IWF) entity.

In a mobile communication system, after a huge number of MTC devices are introduced, in order to reduce network loads and save network resources, it is necessary to optimally manage the MTC devices in a grouping manner. Moreover, these MTC devices may send small data frequently, thereby reducing the efficiency of the mobile communication system. In order to efficiently use network resources, it is necessary to enhance and optimize the mobile communication system according to small data transmission so as to improve the small data transmission efficiency of the mobile communication system. It is very effective to transmit small data between the MTC devices and the MTC-IWF entity as well as the service server via signaling. Not only allocation of user plane resources can be avoided, but also usage of radio resources can be reduced. Meanwhile, in view of the situation of an MTC device group, it is necessary to securely control and manage the MTC devices in a grouping manner during small data transmission.

Currently, a Small Data Transmission Protocol (SDT) is introduced into a method for transmitting small data between an MTC device and an MTC-IWF entity as well as a service server via signaling, and is deployed on the MTC device and the MTC-IWF entity. Any data exchange between the MTC device and the service server needs the MTC-IWF entity. In the above method, it is necessary to establish a shared key between the MTC device and the MTC-IWF entity in order to guarantee the security of data transmission between the MTC device and the MTC-IWF entity. In view of the situation of an MTC device group, it is necessary to establish a shared key between a group of MTC devices and an MTC-IWF entity. How to establish a shared key between a group of MTC devices and an MTC-IWF entity is a problem to be solved urgently.

3GPP TR 33.868 V0.13.0 (2013-04) studies the security aspects of System Improvements for Machine Type Communication.

Group keys for MTC group messaging, by NEC Corporation, proposes a solution to derive and use a pair of keys, named as goup keys, for confidentiality and integrity protection of group messagest he group keys are sent by the network to all the UEs in the group. The group keys could be derived by the HSS or by any other node responsible for group formation as per the decision by SA2.

### SUMMARY

In order to solve the existing technical problem, the embodiments of the disclosure provide a method for establishing a secure small data transmission connection for an MTC device group, an HSS and a system.

A method for establishing a secure small data transmission connection for an MTC device group, provided by an embodiment of the disclosure, may include that:
after receiving authentication data request information, an HSS checks whether an MTC device belongs to an MTC device group, and generates, when the MTC device is determined to belong to the MTC device group, authentication response data and a shared key between the MTC device and an MTC-IWF entity, herein the authentication data request information is sent by a Mobility Management Entity (MME) after receiving attachment request information sent by the MTC device; and
the HSS sends the authentication response data and auxiliary information for generating the shared key to the MME, and sends MTC device group identification information and the shared key to the MTC-IWF entity, herein the authentication response data is used for mutual authentication between the MME and the MTC device, such that the MTC device generates the shared key between the MTC device and the MTC-IWF entity according to the received auxiliary information for generating the shared key after the authentication is completed.

In an embodiment, MTC device group information may include: MTC device group identification information and MTC device group key information.

In an embodiment, MTC device information may include: user identity information about an MTC device, or may further include MTC device identity information, or may further include small data sending and receiving capability information about an MTC device.

In an embodiment, before a secure small data transmission connection is established for the MTC device group, the method may further include that:
the HSS pre-stores MTC device information about an MTC device and the MTC device group information about the MTC device group to which the MTC device belongs.

In an embodiment, before the secure small data transmission connection is established for the MTC device group, the method may further include that:
the HSS sends the MTC device group information to each MTC device included in the MTC device group.

In an embodiment, the step that the HSS sends the MTC device group information to each MTC device included in the MTC device group may include that:
after receiving the authentication data request information, the HSS checks MTC device group information about the MTC device group to which the MTC device belongs according to the stored MTC device information, and sends the MTC device group information and authentication response data to the MME,
herein the authentication data request information is sent by the MME after receiving the attachment request information sent by the MTC device, and the authentication response data is used for mutual authentication between the MME and the MTC device, such that the MME sends the MTC device group information to the MTC device after the authentication is completed.

In an embodiment, the attachment request information may include: the MTC device information about the MTC device.

In an embodiment, the attachment request information may further include: the MTC device group identification information about the MTC device group to which the MTC device belongs and the small data sending and receiving capability information about the MTC device.

In an embodiment, the step that the HSS generates the shared key between the MTC device and the MTC-IWF entity may include that:
the HSS processes an MTC device group key in the MTC device group information according to a key generation algorithm and the auxiliary information, and generates the shared key between the MTC device and the MTC-IWF entity.

In an embodiment, after the HSS generates the shared key between the MTC device and the MTC-IWF entity, the method may further include that:
the HSS re-generates a next-level key for protecting secure small data transmission according to the generated shared key and new auxiliary information.

In an embodiment, the next-level key may include: a small data encryption key and/or a small data integrity protection key.

In an embodiment, after the HSS sends the authentication response data to the MME, the method may further include that:
the HSS sends the next-level key for protecting secure small data transmission to the MTC-IWF entity, and correspondingly, the new auxiliary information is configured for the MTC device to re-generate, according to the shared key after the authentication is completed, a next-level key for protecting secure small data transmission.

In an embodiment, when other MTC devices, except the above MTC device, in the MTC device group need to send small data, the method may further include that:
the HSS determines whether it is necessary to re-generate a shared key or generate a shared key and a next-level key according to a life cycle of the established shared key or life cycles of the shared key and the next-level key, and if not, the HSS sends generated authentication response data and auxiliary information for generating the shared key to the MME, or sends the generated authentication response data, the auxiliary information for generating the shared key and new auxiliary information for generating the next-level key to the MME,
herein the authentication response data is used for mutual authentication between the MME and the other MTC devices, such that the other MTC devices generate the shared key or generate the shared key and the next-level key respectively according to the received auxiliary information for the shared key or according to the auxiliary information for the shared key and the new auxiliary information for the next-level key after the authentication is completed.

A method for establishing a secure small data transmission connection for an MTC device group, provided by an embodiment of the disclosure, may include that:
an MTC device sends attachment request information to an MME;
the MME sends authentication data request information to an HSS;
after receiving the authentication data request information, the HSS checks whether the MTC device belongs to an MTC device group, and generates, when the MTC device is determined to belong to the MTC device group, authentication response data and a shared key between the MTC device and an MTC-IWF entity;
the HSS sends the authentication response data and auxiliary information for generating the shared key to the MME, and sends MTC device group identification information and the shared key to the MTC-IWF entity;
mutual authentication is conducted between the MME and the MTC device;
the MME sends the auxiliary information for the shared key to the MTC device; and
the MTC device generates the shared key between the MTC device and the MTC-IWF entity according to the received auxiliary information for the shared key after the authentication is completed.

In an embodiment, MTC device group information may include: MTC device group identification information and MTC device group key information.

In an embodiment, MTC device information may include: user identity information about an MTC device, or may further include MTC device identity information, or may further include small data sending and receiving capability information about an MTC device.

In an embodiment, before a secure small data transmission connection is established for the MTC device group, the method may further include that:
the HSS pre-stores MTC device information about an MTC device and the MTC device group information about the MTC device group to which the MTC device belongs.

In an embodiment, before the secure small data transmission connection is established for the MTC device group, the method may further include that:
the HSS sends the MTC device group information to each MTC device included in the MTC device group, and each MTC device receives the information about the MTC device group to which it belongs and then stores the information.

In an embodiment, the step that the HSS sends the MTC device group information to each MTC device included in the MTC device group may include that:
the MTC device sends the attachment request information to the MME;
the MME sends the authentication data request information to the HSS;
after receiving the authentication data request information, the HSS checks MTC device group information about the MTC device group to which the MTC device belongs according to the stored MTC device information, and sends the MTC device group information and authentication response data to the MME;
mutual authentication is conducted between the MME and the MTC device, and the MME sends the MTC device group information to the MTC device after the authentication is completed; and
the MTC device stores the MTC device group information.

In an embodiment, the attachment request information may include: the MTC device information about the MTC device.

In an embodiment, the attachment request information may further include: the MTC device group identification information about the MTC device group to which the MTC device belongs and the small data sending and receiving capability information about the MTC device.

In an embodiment, after the HSS generates the shared key between the MTC device and the MTC-IWF entity, the method may further include that:
the HSS re-generates a next-level key for protecting secure small data transmission according to the generated shared key and new auxiliary information; correspondingly,
after sending the authentication response data and the new auxiliary information to the MME, the HSS sends the next-level key for protecting secure small data transmission to the MTC-IWF entity;
mutual authentication is conducted between the MME and the MTC device;
the MME sends the new auxiliary information to the MTC device; and
after mutual authentication is conducted between the MME and the MTC device, the MTC device re-generates a next-level key for protecting secure small data transmission according to the generated shared key and the received new auxiliary information.

In an embodiment, the next-level key may include: a small data encryption key and/or a small data integrity protection key.

In an embodiment, when other MTC devices, except the above MTC device, in the MTC device group need to send small data, the method may further include that:
the HSS determines whether it is necessary to re-generate a shared key or generate a shared key and a next-level key according to a life cycle of the established shared key or life cycles of the shared key and the next-level key, and if not, the HSS sends generated authentication response data and the auxiliary information for generating the shared key to the MME, or sends the generated authentication response data, the auxiliary information for generating the shared key and new auxiliary information for generating the next-level key to the MME;
mutual authentication is conducted between the MME and the other MTC devices;
the MME sends the auxiliary information for generating the shared key or the auxiliary information for generating the shared key and the new auxiliary information for generating the next-level key to the other MTC devices; and
the other MTC devices generate the shared key or generate the shared key and the next-level key respectively according to the received auxiliary information for the shared key or according to the auxiliary information for generating the shared key and the new auxiliary information for generating the next-level key after the authentication is completed.

An HSS provided by an embodiment of the disclosure may include: a sending/receiving unit and a determining and processing unit, in which:
the sending/receiving unit is configured to receive authentication data request information, send authentication response data generated by the determining and processing unit and auxiliary information for generating the shared key to an MME, and send MTC device group identification information, generated by the determining and processing unit, and the shared key to an MTC-IWF entity; and
the determining and processing unit is configured to check whether an MTC device belongs to the MTC device group, and generate, when the MTC device is determined to belong to the MTC device group, the authentication response data and the shared key between the MTC device and an MTC-IWF entity,
herein, the authentication data request information being sent by the MME after receiving attachment request information sent by the MTC device, the authentication response data is used for mutual authentication between the MME and the MTC device, such that the MTC device generates the shared key between the MTC device and the MTC-IWF entity according to the received auxiliary information for generating the shared key after the authentication is completed.

In an embodiment, the HSS may further include: a storage unit configured to pre-store MTC device information about an MTC device and the MTC device group information about the MTC device group to which the MTC device belongs.

In an embodiment, the sending/receiving unit may be further configured to send the MTC device to each MTC device included in the MTC device group.

In an embodiment, the determining and processing unit may be further configured to re-generate a next-level key for protecting secure small data transmission according to the generated shared key and new auxiliary information.

In an embodiment, the sending/receiving unit may be further configured to send the next-level key for protecting secure small data transmission to the MTC-IWF entity,
and correspondingly, the authentication response data is used for mutual authentication between the MME and the MTC device, and enables the MTC device to re-generate the next-level key for protecting secure small data transmission according to the shared key and the new auxiliary information after the authentication is completed.

In an embodiment, when other MTC devices, except the above MTC device, in the MTC device group need to send small data,
the determining and processing unit may be further configured to determine whether it is necessary to re-generate a shared key or generate a shared key and a next-level key according to a life cycle of the established shared key or life cycles of the shared key and the next-level key, and trigger, if not, the sending/receiving unit to send authentication response data and auxiliary information for generating the shared key, or trigger the sending/receiving unit to send new auxiliary information for generating the next-level key,
herein the authentication response data is used for mutual authentication between the MME and the other MTC devices, such that the other MTC devices generate the shared key or generate the shared key and the next-level key respectively according to the received auxiliary information for the shared key or according to the auxiliary information for the shared key and the new auxiliary information for the next-level key after the authentication is completed.

A system for establishing a secure small data transmission connection for an MTC device group, provided by an embodiment of the disclosure, may include: an MTC device, an MME, an HSS and an MTC-IWF entity.

The MTC device may include: a sending/receiving unit configured to send attachment request information to the MME; and a key negotiation unit configured to perform mutual authentication with the MME, and generate a shared key between the MTC device and the MTC-IWF entity according to received auxiliary information for the shared key after authentication is completed.

The MME may include: a sending/receiving unit configured to send authentication data request information to the HSS, and receive authentication response data and auxiliary information for generating the shared key; and a key negotiation unit configured to perform mutual authentication with the MTC device.

The HSS may include: a sending/receiving unit and a determining and processing unit, in which:
the sending/receiving unit is configured to receive authentication data request information, send the authentication response data generated by the determining and processing unit and the auxiliary information for generating the shared key to the MME, and send MTC device group identification information, generated by the determining and processing unit, and the shared key to the MTC-IWF entity; and
the determining and processing unit is configured to check whether the MTC device belongs to the MTC device group, and generate, when the MTC device is determined to belong to the MTC device group, the authentication response data and the shared key between the MTC device and an MTC-IWF entity.

The MTC-IWF entity may include a sending/receiving unit configured to receive the MTC device group identification information, sent by the HSS, and the shared key.

In an embodiment, the HSS may further include: a storage unit configured to pre-store MTC device information about an MTC device and the MTC device group information about the MTC device group to which the MTC device belongs.

In an embodiment, the sending/receiving unit in the HSS may be further configured to send the MTC device group information to each MTC device included in the MTC device group, and correspondingly,
the MTC device may further include: a storage unit configured to store, after the sending/receiving unit in the MTC device receives the information about the MTC device group to which the MTC device belongs, the information.

In an embodiment, the determining and processing unit in the HSS may be further configured to re-generate a next-level key for protecting secure small data transmission according to the generated shared key and new auxiliary information; and correspondingly,
the sending/receiving unit in the HSS may be further configured to send the next-level key for protecting secure small data transmission to the MTC-IWF entity.

The key negotiation unit in the MTC device may be further configured to re-generate the next-level key for protecting secure small data transmission according to the generated shared key and the new auxiliary information.

In an embodiment, when other MTC devices, except the above MTC device, in the MTC device group need to send small data,
the determining and processing unit in the HSS may be further configured to determine whether it is necessary to re-generate a shared key or generate a shared key and a next-level key according to a life cycle of the established shared key or life cycles of the shared key and the next-level key, and trigger, if not, the sending/receiving unit to send the authentication response data and the auxiliary information for generating the shared key, or trigger the sending/receiving unit to send the new auxiliary information for generating the next-level key; correspondingly,
the key negotiation unit in the MME may be further configured to perform mutual authentication with the other MTC devices; and
the other MTC devices may include key negotiation units configured to perform mutual authentication with the MME, and generate the shared key or generate the shared key and the next-level key respectively according to the received auxiliary information for the shared key or according to the auxiliary information for the shared key and the new auxiliary information for the next-level key after authentication is completed.

A computer executable instruction may be stored in a computer storage medium provided by an embodiment of the disclosure, and may be configured to execute the method for establishing a secure small data transmission connection for an MTC device group.

The embodiments of the disclosure provide a method for establishing a secure small data transmission connection for an MTC device group, an HSS and a system. After receiving authentication data request information, an HSS checks whether an MTC device belongs to an MTC device group, and generates, when the MTC device is determined to belong to the MTC device group, authentication response data and a shared key between the MTC device and an MTC-IWF entity, herein the authentication data request information is sent by an MME after receiving attachment request information sent by the MTC device; the HSS sends the authentication response data and auxiliary information for generating the shared key to the MME, and sends MTC device group identification information and the shared key to the MTC-IWF entity; and the authentication response data is used for mutual authentication between the MME and the MTC device, such that the MTC device generates the shared key between the MTC device and the MTC-IWF entity after the authentication is completed. Compared with the conventional art, the method, device and system in the embodiments of the disclosure solve the technical problem of secure small data transmission between an MTC device in an MTC device group and an MTC-IWF. Thus, a secure small data transmission channel can be established between any MTC device in the MTC device group and the MTC-IWF according to MTC device group information.

### BRIEF DESCRIPTION OF THE DRAWINGS

In the drawings (not necessarily drawn in proportion), similar drawing marks may describe similar parts in different views. The similar drawing marks having different letter suffixes may represent different examples of the similar parts. The drawings substantially show each embodiment discussed herein in an example giving way instead of a limitation way.
Fig. 1 is an implementation flowchart of a method for establishing a secure small data transmission connection for an MTC device group according to an embodiment of the disclosure;
Fig. 2 is an implementation flowchart of a method for establishing a secure small data transmission connection for an MTC device group according to another embodiment of the disclosure;
Fig. 3 is a diagram of an MTC device group information distribution process when an MTC device in an MTC device group is initially attached according to an embodiment of the disclosure;
Fig. 4 is a flowchart showing establishment of a shared key between an MTC device, during attachment, and an MTC-IWF entity according to an embodiment of the disclosure;
Fig. 5 is a flowchart showing generation of a small data encryption key and a small data integrity protection key on the basis of establishing a shared key K_{iwf} between an MTC device and an MTC-IWF entity according to an embodiment of the disclosure;
Fig. 6 is a structural diagram of an HSS according to an embodiment of the disclosure; and
Fig. 7 is a structural diagram of a system for establishing a secure small data transmission connection for an MTC device group according to an embodiment of the disclosure.

### DETAILED DESCRIPTION

The disclosure will be illustrated below with reference to the drawings and in conjunction with the embodiments in detail. It is important to note that the embodiments of the disclosure and the characteristics in the embodiments can be combined under the condition of no conflicts.

In an embodiment of the disclosure, after receiving authentication data request information, an HSS (Home Subscriber Server, HSS) checks whether an MTC device belongs to an MTC device group; when the MTC device is determined to belong to the MTC device group, the HSS generates authentication response data according to a normal AKA process, and generates a shared key between the MTC device and an MTC-IWF entity according to MTC device group information about the MTC device group, herein the authentication data request information is sent by an MME after receiving attachment request information sent by the MTC device; and
the HSS sends the authentication response data and auxiliary information for generating the shared key to the MME simultaneously, and sends MTC device group identification information and the shared key to the MTC-IWF entity, herein the authentication response data is used for mutual authentication between the MME and the MTC device, the auxiliary information for generating the shared key is sent to the MTC device by the MME in a mutual authentication process or after mutual authentication is completed, and after the authentication is completed, the MTC device generates the shared key between the MTC device and the MTC-IWF entity according to the received auxiliary information for generating the shared key and the MTC device group information stored by the MTC device.

The disclosure is further illustrated below in conjunction with the drawings and specific embodiments in detail.

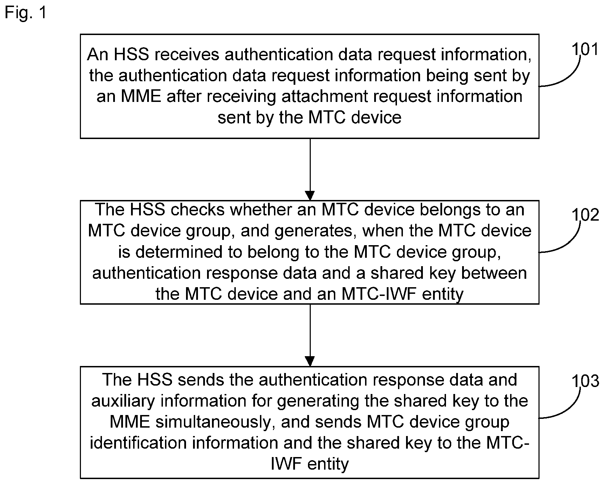

Fig. 1 is an implementation flowchart of a method for establishing a secure small data transmission connection for an MTC device group according to an embodiment of the disclosure. As shown in Fig. 1, the method includes the steps as follows.

Step 101: An HSS receives authentication data request information, the authentication data request information being sent by an MME after receiving attachment request information sent by the MTC device.

Step 102: The HSS checks whether an MTC device belongs to an MTC device group, and when the MTC device is determined to belong to the MTC device group, the HSS generates authentication response data according to a normal AKA process, and generates a shared key between the MTC device and an MTC-IWF entity according to MTC device group information about the MTC device group,
herein the authentication data request information is sent by the MME after receiving the attachment request information sent by the MTC device.

Step 103: The HSS sends the authentication response data and auxiliary information for generating the shared key to the MME simultaneously, and sends MTC device group identification information and the shared key to the MTC-IWF entity, herein the authentication response data is used for mutual authentication between the MME and the MTC device, the auxiliary information for generating the shared key is sent to the MTC device by the MME in a mutual authentication process or after mutual authentication is completed, and after the authentication is completed, the MTC device generates the shared key between the MTC device and the MTC-IWF entity according to the received auxiliary information for generating the shared key and the MTC device group information stored by the MTC device,
herein the MTC device can generate the shared key according to the received auxiliary information for generating the shared key, a stored MTC device group key and a key generation algorithm.

The MTC-IWF entity receives and stores the MTC device group identification information and the shared key, and the MTC-IWF entity also maintains and manages the stored MTC device group identification information and shared key.

In the embodiment of the disclosure, the MTC device group can be maintained and managed via the HSS, and an MTC user can create the MTC device group in the HSS.

In an embodiment, before a secure small data transmission connection is established for the MTC device group, the method further includes that: the HSS pre-stores MTC device information about an MTC device and information, namely the MTC device group information, about the MTC device group to which the MTC device belongs. For instance, the HSS records the MTC device information and the information about the MTC device group to which the MTC device belongs in a form of MTC device subscription information.

Herein, the MTC device group information includes: MTC device group identification information and MTC device group key information. All MTC devices in the MTC device group have the same MTC device group information.

Herein, MTC device information stored by the HSS may include: MTC device identity information such as an International Mobile Equipment Identity (IMEI), or MTC user identity information such as an International Mobile Subscriber Identity (IMSI), or may further include small data sending and receiving capability information about an MTC device.

In an embodiment, before the secure small data transmission connection is established for the MTC device group, the method further includes that:
the HSS sends the MTC device group information to each MTC device included in the MTC device group, which specifically includes that:
after receiving the authentication data request information, the HSS checks MTC device group information about the MTC device group to which the MTC device belongs according to the stored MTC device information, and sends the MTC device group information and authentication response data to the MME, herein the authentication data request information is sent by the MME after receiving the attachment request information sent by the MTC device, and the authentication response data is used for mutual authentication between the MME and the MTC device, and enables the MME to securely send the MTC device group information to the MTC device after the authentication is completed.

Herein, the attachment request information includes: the MTC device information about the MTC device such as an IMSI.

In an embodiment, the attachment request information further includes: the MTC device group identification information about the MTC device group to which the MTC device belongs and the small data sending and receiving capability information about the MTC device.

Herein, the step that the HSS generates the shared key between the MTC device and the MTC-IWF entity refers to that:
the HSS processes an MTC device group key in the MTC device group information according to a key generation algorithm and the auxiliary information, and generates the shared key between the MTC device and the MTC-IWF entity. The auxiliary information may be a random number or other pieces of auxiliary information for generating the shared key.

In an embodiment, after the HSS generates the shared key between the MTC device and the MTC-IWF entity, the method further includes that:
the HSS re-generates a next-level key, such as a small data encryption key and/or a small data integrity protection key, for protecting secure small data transmission according to the generated shared key and new auxiliary information. The new auxiliary information may be a random number or other pieces of auxiliary information for generating the shared key.

Furthermore, after the HSS sends the authentication response data, the auxiliary information for generating the shared key and the new auxiliary information for generating the next-level key to the MME, the method further includes that: the HSS sends the next-level key for protecting secure small data transmission to the MTC-IWF entity, correspondingly,
herein the authentication response data is used for mutual authentication between the MME and the MTC device; the auxiliary information for generating the shared key and the new auxiliary information for generating the next-level key are sent to the MTC device by the MME in a mutual authentication process or after mutual authentication is completed; and the auxiliary information for generating the shared key and the new auxiliary information for generating the next-level key are further configured for the MTC device to re-generate, according to the shared key after the authentication is completed, a next-level key for protecting secure small data transmission.

In an embodiment, after secure small data transmission is established between an MTC device in the MTC device group and the MTC-IWF entity, when other MTC devices, except the above MTC device, in the MTC device group need to send small data, the method further includes that:
the HSS determines whether it is necessary to re-generate a shared key or generate a shared key and a next-level key according to a life cycle of the established shared key or life cycles of the shared key and the next-level key, and if not, the HSS sends generated authentication response data and auxiliary information for generating the shared key to the MME, or sends the generated authentication response data, the auxiliary information for generating the shared key and new auxiliary information for generating the next-level key to the MME,
herein the authentication response data is used for mutual authentication between the MME and the other MTC devices; the auxiliary information for generating the shared key or the auxiliary information for generating the shared key and the new auxiliary information for generating the next-level key are sent to the MTC device by the MME in a mutual authentication process or after mutual authentication is completed; and the other MTC devices generate the shared key or generate the shared key and the next-level key respectively according to the received auxiliary information for the shared key or according to the auxiliary information for the shared key and the new auxiliary information for the next-level key after the authentication is completed.

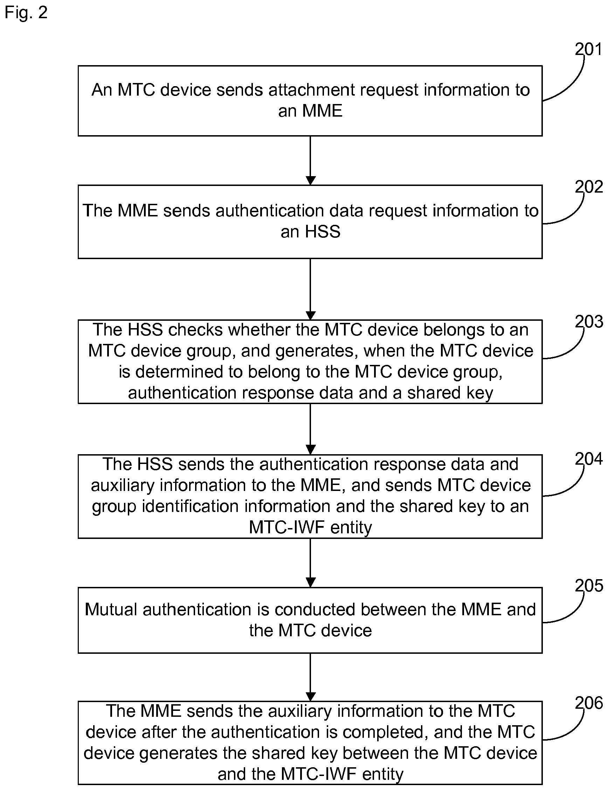

An embodiment of the disclosure also provides a method for establishing a secure small data transmission connection for an MTC device group. As shown in Fig. 2, the method includes the steps as follows.

Step 201: An MTC device sends attachment request information to an MME.

Step 202: The MME sends authentication data request information to an HSS.

Step 203: After receiving the authentication data request information, the HSS checks whether the MTC device belongs to an MTC device group; when the MTC device is determined to belong to the MTC device group, the HSS generates authentication response data according to a normal AKA process, and generates a shared key between the MTC device and an MTC-IWF entity according to MTC device group information about the MTC device group.

Step 204: The HSS sends the authentication response data and auxiliary information for generating the shared key to the MME simultaneously, and sends MTC device group identification information and the shared key to the MTC-IWF entity.

Step 205: Mutual authentication is conducted between the MME and the MTC device.

Step 206: The MME sends the auxiliary information for generating the shared key to the MTC device after the authentication is completed, and the MTC device generates the shared key between the MTC device and the MTC-IWF entity according to the received auxiliary information for generating the shared key and the MTC device group information stored by the MTC device.

Herein, the MTC device group information includes: MTC device group identification information and MTC device group key information.

Herein, MTC device information includes: user identity information, namely an IMSI, about an MTC device, and/or MTC device identity information namely an IMEI, or further includes small data sending and receiving capability information about an MTC device.

In an embodiment, before a secure small data transmission connection is established for the MTC device group, the method further includes that:
the HSS pre-stores MTC device information about an MTC device and the MTC device group information about the MTC device group to which the MTC device belongs.

In an embodiment, before the secure small data transmission connection is established for the MTC device group, the method further includes that:
the HSS sends the MTC device group information to each MTC device included in the MTC device group, and each MTC device receives the information about the MTC device group to which it belongs and then stores the information.

Herein, the step that the HSS sends the information about the MTC device group, to which each MTC device belongs, to the corresponding MTC device includes that:
the MTC device sends the attachment request information to the MME;
the MME sends the authentication data request information to the HSS;
after receiving the authentication data request information, the HSS checks MTC device group information about the MTC device group to which the MTC device belongs according to the stored MTC device information, and sends the MTC device group information and authentication response data to the MME;
mutual authentication is conducted between the MME and the MTC device, and the MME securely sends the MTC device group information to the MTC device after the authentication is completed; and
the MTC device stores the MTC device group information.

Herein, the attachment request information includes: the MTC device information about the MTC device.

In an embodiment, the attachment request information further includes: the MTC device group identification information about the MTC device group to which the MTC device belongs and the small data sending and receiving capability information about the MTC device.

In an embodiment, after the HSS generates the shared key between the MTC device and the MTC-IWF entity, the method further includes that:
the HSS re-generates a next-level key for protecting secure small data transmission according to the generated shared key and new auxiliary information; correspondingly,
after sending the authentication response data and the new auxiliary information to the MME, the HSS sends the next-level key for protecting secure small data transmission to the MTC-IWF entity;
mutual authentication is conducted between the MME and the MTC device;
the MME sends the new auxiliary information to the MTC device; and
after mutual authentication is conducted between the MME and the MTC device, the MTC device re-generates a next-level key for protecting secure small data transmission according to the generated shared key and the received new auxiliary information.

Herein, the next-level key includes: a small data encryption key and/or a small data integrity protection key.

In an embodiment, when other MTC devices, except the above MTC device, in the MTC device group need to send small data, the method further includes that:
the HSS determines whether it is necessary to re-generate a shared key or generate a shared key and a next-level key according to a life cycle of the established shared key or life cycles of the shared key and the next-level key, and if not, the HSS sends generated authentication response data and the auxiliary information for generating the shared key to the MME, or sends the generated authentication response data, the auxiliary information for generating the shared key and new auxiliary information for generating the next-level key to the MME;
mutual authentication is conducted between the MME and the other MTC devices;
the MME sends the auxiliary information for generating the shared key or the auxiliary information for generating the shared key and the new auxiliary information for generating the next-level key to the other MTC devices; and
the other MTC devices generate the shared key or generate the shared key and the next-level key respectively according to the received auxiliary information for the shared key or according to the auxiliary information for generating the shared key and the new auxiliary information for generating the next-level key after the authentication is completed.

The disclosure is described below in conjunction with specific embodiments in detail.

In the disclosure, an MTC device group can be maintained and managed via an HSS. An MTC user can create the MTC device group in the HSS. MTC device information and information about the MTC device group to which the MTC device belongs are stored in the HSS. For instance, the MTC device information and the information about the MTC device group to which the MTC device belongs are recorded in a form of MTC device subscription information, herein the MTC device group information includes: MTC device group identification information and MTC device group key information. All MTC devices in the MTC device group have the same MTC device group information.

When an MTC device belongs to an MTC device group which has been created, it is also necessary to store corresponding MTC device group information on the MTC device. For instance, the corresponding MTC device group information is stored on a Universal Integrated Circuit Card (UICC) of the MTC device, which may specifically be:
after an MTC user creates an MTC device group in an HSS, when an MTC device is attached to a network initially, the HSS checks MTC device group information about the MTC device group to which the MTC device belongs according to MTC device information such as IMSI information, when the MTC device belongs to an MTC device group which has been created, after the MTC device accomplishes an attachment process, the network securely sends the MTC device group information about the MTC device group to which the MTC device belongs to the MTC device for storage on a UICC of the MTC device for instance.

In the embodiments of the disclosure, MTC device information stored by the HSS may include: MTC device information such as MTC user identity information IMSI and/or MTC device identity information IMEI, and may further include small data sending and receiving capability information.

In order to establish secure small data transmission between the MTC device and an MTC-IWF entity, the MTC device and the HSS can further generate a next-level key, such as a small data encryption key and/or a small data integrity protection key, for protecting secure small data transmission on the basis of a shared key, which may be implemented in the following manner:
when generating the shared key, the HSS can further generate a next-level key, such as an encryption key and/or a integrity protection key, for protecting secure small data transmission via the shared key according to system requirements or according to secure small data transmission protection requirements, and then sends MTC device group identification information and the generated next-level key to the MTC-IWF entity for storage.

When generating the shared key, the MTC device can further generate a next-level key, such as an encryption key and/or a integrity protection key, for protecting secure small data transmission via the shared key according to system requirements or according to secure small data transmission protection requirements.

Small data is securely transmitted between the MTC device and the MTC-IWF entity via the established encryption key and integrity protection key.

In the embodiments of the disclosure, after secure small data transmission is established between an MTC device in the MTC device group and the MTC-IWF entity, when other MTC devices in the MTC device group need to send small data, the HSS determines whether it is necessary to re-generate a shared key or generate a shared key and a next-level key according to a life cycle of the established shared key or life cycles of the shared key and the next-level key, and when it is unnecessary to generate a small data transmission protection key, the HSS only needs to send generated authentication response data and auxiliary information for generating the shared key previously to the MME, or the HSS only needs to send the generated authentication response data, the auxiliary information for generating the shared key previously and new auxiliary information for generating the next-level key to the MME, and then mutual authentication between the other MTC devices and the MME is completed. The other MTC devices generate the shared key or generate the shared key and the next-level key after the authentication is completed. When the other MTC devices need to send small data to the MTC-IWF entity, the MTC device and the MTC-IWF entity use the same key.

The method of the disclosure is described below in conjunction with specific application scenarios.

### First scenario:

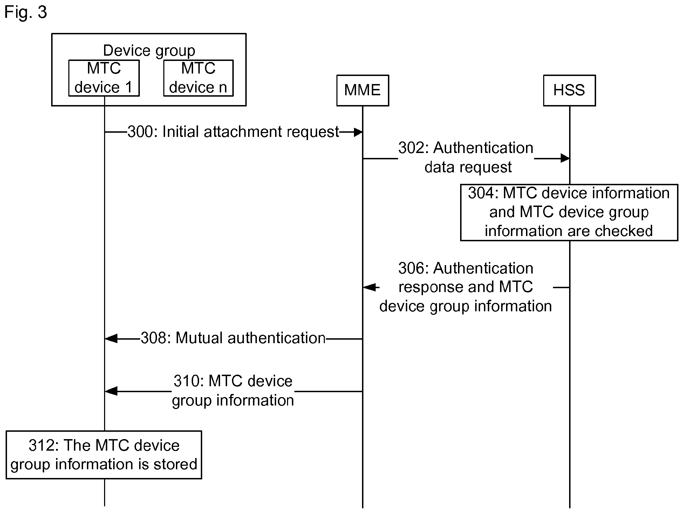

When an MTC device in the MTC device group is initially attached, an MTC device group information distribution process is shown in Fig. 3, which includes the steps as follows.

Step 300: The MTC device sends attachment request information to a network side such as an MME, the attachment request information including MTC device information such as an IMSI.

Step 302: The MME sends authentication data request information to an HSS.

Step 304: The HSS checks MTC device group information about the MTC device group to which the MTC device belongs according to stored MTC device information.

Step 306: The HSS sends the MTC device group information and authentication response data to the MME.

Step 308: Mutual authentication between the MME and the MTC device is completed according to the authentication response data.

Step 310: The MME sends the MTC device group information to the MTC device. For instance, the MME sends the MTC device group information to the MTC device via a secure channel between the MME and the MTC device.

Step 312: The MTC device stores the MTC device group information.

### Second scenario:

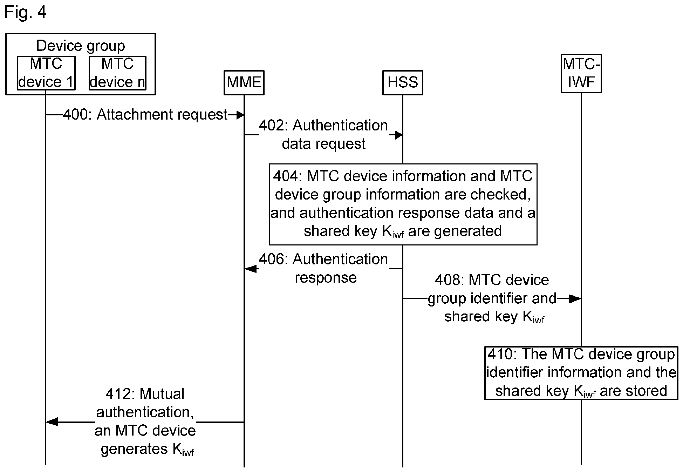

An MTC device, during attachment, and an MTC-IWF entity establish a shared key K_{iwf}. Specifically, as shown in Fig. 4, the operation includes the steps as follows.

Step 400: The MTC device ends attachment request information to a network side, the attachment request information including MTC device information such as an IMSI, and further including MTC device group identification information and small data sending/receiving capability information about the MTC device.

Step 402: An MME sends authentication data request information to an HSS.

Step 404: The HSS checks MTC device group information about the MTC device group to which the MTC device belongs according to the MTC device information and MTC device group information. When the MTC device is determined to belong to an MTC device group, the HSS generates authentication response data according to a normal AKA process, and generates a shared key K_{iwf} between the MTC device and the MTC-IWF entity according to the MTC device group information about the MTC device group, the K_{iwf} being generated by an MTC device group key and auxiliary information according to a key generation algorithm.

Step 406: The HSS sends the authentication response data and the auxiliary information for generating the shared key to the MME.

Step 408: The HSS sends the MTC device group identification information and the generated K_{iwf} to the MTC-IWF entity.

Step 410: The MTC-IWF entity receives and stores the MTC device group identification information and the K_{iwf}.

Step 412: The MME and the MTC device accomplish mutual authentication according to authentication data, the MME sends the auxiliary information for generating the shared key to the MTC device, and after the authentication is completed, the MTC device generates K_{iwf} according to the stored MTC device group key, the key generation algorithm and the received auxiliary information for generating the shared key.

### Third scenario:

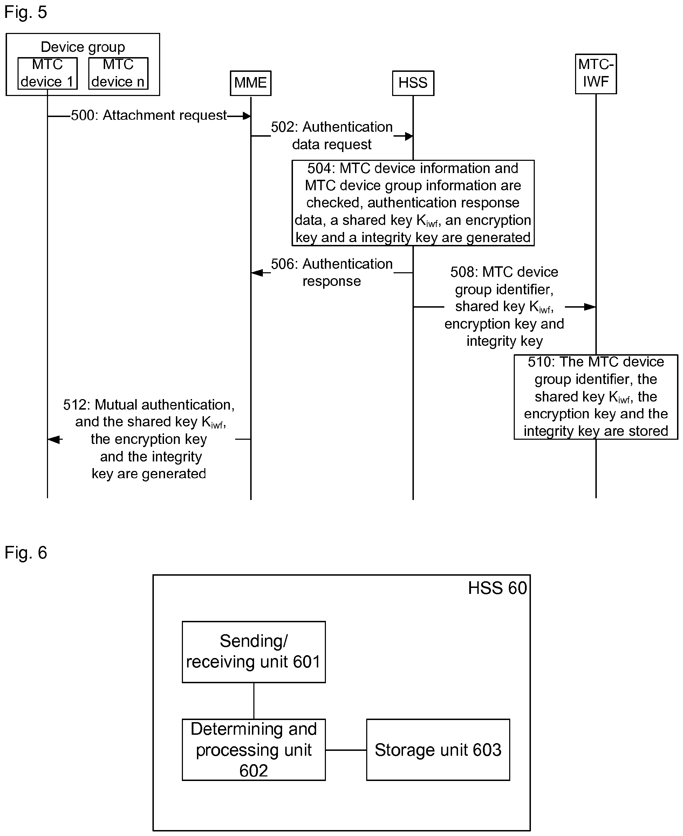

On the basis of establishment of a shared key K_{iwf}, an MTC device and an MTC-IWF entity further generate a small data encryption key and a small data integrity protection key. Specifically, as shown in Fig. 5, the operation includes the steps as follows.

Step 500: The MTC device ends attachment request information to a network side, the attachment request information including MTC device information such as an IMSI, and further including MTC device group identification information and small data sending/receiving capability information about the MTC device.

Step 502: An MME sends authentication data request information to an HSS.

Step 504: The HSS checks MTC device group information about the MTC device group to which the MTC device belongs according to the MTC device information and MTC device group information. When the MTC device is determined to belong to an MTC device group, the HSS generates authentication response data according to a normal AKA process, and further generates a shared key K_{iwf} between the MTC device and the MTC-IWF entity according to auxiliary information; and
when generating the K_{iwf}, the HSS can further generate a next-level key, such as an encryption key and a integrity protection key, for protecting secure small data transmission via the K_{iwf} and new auxiliary information according to system requirements or according to secure small data transmission protection requirements.

Step 506: The HSS sends the authentication response data, the auxiliary information for generating the shared key and the new auxiliary information for generating the next-level key to the MME.

Step 508: The HSS sends the MTC device group identification information, the generated K_{iwf}, the encryption key and the integrity protection key to the MTC-IWF entity.

Step 510: The MTC-IWF entity receives and stores the MTC device group identification information, the K_{iwf}, the encryption key and the integrity protection key.

Step 512: The MME and the MTC device accomplish mutual authentication according to authentication data, and the MME sends the auxiliary information for generating the shared key and the new auxiliary information for generating the next-level key to the MTC device. After the authentication is completed, the MTC device generates the K_{iwf} according to a stored MTC device group key, a key generation algorithm and the received auxiliary information for generating the shared key. The MTC device can further generate a next-level key, such as an encryption key and a integrity protection key, for protecting secure small data transmission via the K_{iwf} and the received new auxiliary information for generating the next-level key according to system requirements or according to secure small data transmission protection requirements.

An embodiment of the disclosure also provides an HSS. As shown in Fig. 6, the HSS 60 includes: a sending/receiving unit 601 and a determining and processing unit 602, in which:
the sending/receiving unit 601 is configured to receive authentication data request information, send authentication response data generated by the determining and processing unit and auxiliary information for generating the shared key to an MME, and send MTC device group identification information, generated by the determining and processing unit, and the shared key to an MTC-IWF entity; and
the determining and processing unit 602 is configured to check whether an MTC device belongs to the MTC device group, and generate, when the MTC device is determined to belong to the MTC device group, the authentication response data and the shared key between the MTC device and an MTC-IWF entity,
herein the authentication data request information is sent by the MME after receiving attachment request information sent by the MTC device, the authentication response data is used for mutual authentication between the MME and the MTC device, such that the MTC device generates the shared key between the MTC device and the MTC-IWF entity according to the received auxiliary information for generating the shared key after the authentication is completed.

Herein, MTC device group information includes: MTC device group identification information and MTC device group key information.

Herein, MTC device information includes: user identity information about an MTC device, or further includes MTC device identity information, or further includes small data sending and receiving capability information about an MTC device.

In an embodiment, the HSS 60 further includes: a storage unit 603 configured to pre-store MTC device information about an MTC device and the MTC device group information about the MTC device group to which the MTC device belongs.

In an embodiment, the sending/receiving unit 601 is further configured to send the MTC device group information to each MTC device included in the MTC device group.

In an embodiment, the determining and processing unit 602 is further configured to re-generate a next-level key for protecting secure small data transmission according to the generated shared key and new auxiliary information for generating a next-level key.

In an embodiment, the sending/receiving unit 601 is further configured to send the next-level key for protecting secure small data transmission to the MTC-IWF entity,
and correspondingly, the authentication response data is used for mutual authentication between the MME and the MTC device, and enables the MTC device to re-generate the next-level key for protecting secure small data transmission according to the shared key and the new auxiliary information after the authentication is completed.

In an embodiment, when other MTC devices, except the above MTC device, in the MTC device group need to send small data,
the determining and processing unit 602 is further configured to determine whether it is necessary to re-generate a shared key or generate a shared key and a next-level key according to a life cycle of the established shared key or life cycles of the shared key and the next-level key, and trigger, if not, the sending/receiving unit to send authentication response data and auxiliary information for generating the shared key, or trigger the sending/receiving unit to send new auxiliary information for generating the next-level key,
herein the authentication response data is used for mutual authentication between the MME and the other MTC devices, such that the other MTC devices generate the shared key or generate the shared key and the next-level key respectively according to the received auxiliary information for the shared key or according to the auxiliary information for the shared key and the new auxiliary information for the next-level key after the authentication is completed.

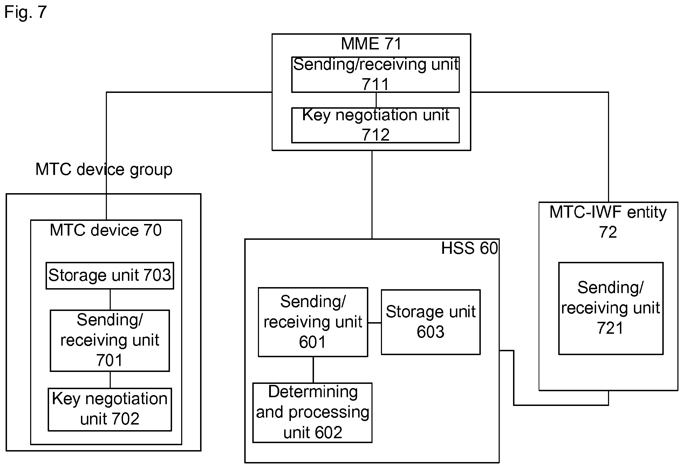

An embodiment of the disclosure also provides a system for establishing a secure small data transmission connection for an MTC device group. As shown in Fig. 7, the system includes: an MTC device 70, an MME 71, an HSS 60 and an MTC-IWF entity 72.

The MTC device 70 includes: a sending/receiving unit 701 configured to send attachment request information to the MME; and a key negotiation unit 702 configured to perform mutual authentication with the MME, and generate a shared key between the MTC device and the MTC-IWF entity according to received auxiliary information for the shared key after authentication is completed.

The MME 71 includes: a sending/receiving unit 711 configured to send authentication data request information to the HSS, and receive authentication response data and auxiliary information for generating the shared key; and a key negotiation unit 712 configured to perform mutual authentication with the MTC device.

The HSS 60 includes: a sending/receiving unit 601 and a determining and processing unit 602, in which:
the sending/receiving unit 601 is configured to receive authentication data request information, send the authentication response data generated by the determining and processing unit and the auxiliary information for generating the shared key to the MME, and send MTC device group identification information, generated by the determining and processing unit, and the shared key to the MTC-IWF entity; and
the determining and processing unit 602 is configured to check whether the MTC device belongs to the MTC device group, generate, when the MTC device is determined to belong to the MTC device group, the authentication response data according to a normal AKA process, and generate the shared key between the MTC device and an MTC-IWF entity.

The MTC-IWF entity 72 includes a sending/receiving unit 721 configured to receive the MTC device group identification information, sent by the HSS, and the shared key.

Herein, MTC device group information includes: MTC device group identification information and MTC device group key information.

Herein, MTC device information includes: user identity information about an MTC device, or further includes MTC device identity information, or further includes small data sending and receiving capability information about an MTC device.

In an embodiment, the HSS 60 further includes: a storage unit 603 configured to pre-store MTC device information about an MTC device and the MTC device group information about the MTC device group to which the MTC device belongs.

In an embodiment, the sending/receiving unit 601 in the HSS 60 is further configured to send the MTC device group information to each MTC device included in the MTC device group, and correspondingly,
the MTC device 70 further includes: a storage unit 703 configured to store, after the sending/receiving unit 701 in the MTC device receives the information about the MTC device group to which the MTC device belongs, the information.

In an embodiment, the determining and processing unit 602 in the HSS 60 is further configured to re-generate a next-level key for protecting secure small data transmission according to the generated shared key and new auxiliary information; and correspondingly,
the sending/receiving unit 601 in the HSS 60 is further configured to send the next-level key for protecting secure small data transmission to the MTC-IWF entity 72.

The key negotiation unit 702 in the MTC device 70 is further configured to re-generate the next-level key for protecting secure small data transmission according to the generated shared key and the new auxiliary information for generating the next-level key.

In an embodiment, when other MTC devices, except the above MTC device, in the MTC device group need to send small data,
the determining and processing unit 602 in the HSS 60 is further configured to determine whether it is necessary to re-generate a shared key or generate a shared key and a next-level key according to a life cycle of the established shared key or life cycles of the shared key and the next-level key, and trigger, if not, the sending/receiving unit to send the authentication response data and the auxiliary information for generating the shared key, or trigger the sending/receiving unit to send the new auxiliary information for generating the next-level key; correspondingly,
the key negotiation unit 712 in the MME 71 is further configured to perform mutual authentication with the other MTC devices; and
the other MTC devices (not shown in Fig. 7) include key negotiation units configured to perform mutual authentication with the MME, and generate the shared key or generate the shared key and the next-level key respectively according to the received auxiliary information for the shared key or according to the auxiliary information for the shared key and the new auxiliary information for the next-level key after authentication is completed.

An embodiment of the disclosure also provides a computer storage medium, a computer executable instruction being stored therein and being configured to execute the method for establishing a secure small data transmission connection for an MTC device group according to the above embodiment.

The method, device and system in the embodiments of the disclosure solve the technical problem of secure small data transmission between an MTC device in an MTC device group and an MTC-IWF. Thus, a secure small data transmission channel can be established between any MTC device in the MTC device group and the MTC-IWF according to MTC device group information.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiments of the disclosure and is not intended to limit the protective scope of the disclosure.

## Claims

1. A method for establishing a secure small data transmission connection for a Machine Type Communication, MTC, device group, **characterized in that** the method comprising:
checking, after a Home Subscriber Server, HSS, receives authentication data request information (101), whether an MTC device belongs to the MTC device group, and generating, when the MTC device is determined to belong to the MTC device group, authentication response data and a shared key between the MTC device and an MTC Inter Working Function, MTC-IWF, entity (102), wherein the authentication data request information is sent by a Mobility Management Entity, MME, after receiving attachment request information sent by the MTC device; and
sending, by the HSS, the authentication response data and auxiliary information for generating the shared key to the MME, and sending MTC device group identification information and the shared key to the MTC-IWF entity (103), wherein the authentication response data is used for mutual authentication between the MME and the MTC device (205), such that the MTC device generates the shared key between the MTC device and the MTC-IWF entity according to the received auxiliary information for generating the shared key after the authentication is completed (206).

2. The method according to 1, further comprising: before the secure small data transmission connection is established for the MTC device group, pre-storing, by the HSS, MTC device information about an MTC device and the MTC device group information about the MTC device group to which the MTC device belongs; or
further comprising: before the secure small data transmission connection is established for the MTC device group, sending, by the HSS, the MTC device group information to each MTC device included in the MTC device group,
wherein the MTC device group information comprises: MTC device group identification information and MTC device group key information; the MTC device information comprises user identity information about an MTC device, or further comprises MTC device identity information, or further comprises small data sending and receiving capability information about an MTC device.

3. The method according to claim 2, wherein sending, by the HSS, the MTC device group information to each MTC device included in the MTC device group comprises:
checking, by the HSS after receiving the authentication data request information, the MTC device group information about the MTC device group to which the MTC device belongs according to the stored MTC device information, and sending the MTC device group information and authentication response data to the MME,
wherein the authentication data request information is sent by the MME after receiving the attachment request information sent by the MTC device, and the authentication response data is used for mutual authentication between the MME and the MTC device, such that the MME sends the MTC device group information to the MTC device after the authentication is completed.

4. The method according to claim 2, wherein the attachment request information comprises: the MTC device information about the MTC device;
the attachment request information further comprises: the MTC device group identification information about the MTC device group to which the MTC device belongs, and the small data sending and receiving capability information about the MTC device.

5. The method according to claim 2, wherein generating, by the HSS, the shared key between the MTC device and the MTC-IWF entity comprises:
processing, by the HSS, an MTC device group key in the MTC device group information according to a key generation algorithm and the auxiliary information, and generating the shared key between the MTC device and the MTC-IWF entity.

6. The method according to claim 1, further comprising: after the HSS generates the shared key between the MTC device and the MTC-IWF entity,
re-generating, by the HSS, a next-level key for protecting secure small data transmission according to the generated shared key and new auxiliary information, wherein the next-level key comprises: a small data encryption key and/or a small data integrity protection key.

7. The method according to claim 6, further comprising: after the HSS sends the authentication response data to the MME,
sending, by the HSS, the next-level key for protecting secure small data transmission to the MTC-IWF entity, wherein the new auxiliary information is configured for the MTC device to re-generate, according to the shared key after the authentication is completed, a next-level key for protecting secure small data transmission; or
the method further comprising: when other MTC devices, except the above MTC device, in the MTC device group need to send small data,
determining, by the HSS according to a life cycle of the established shared key or life cycles of the shared key and the next-level key, whether it is necessary to re-generate a shared key or generate a shared key and a next-level key, and if not, sending, by the HSS, the generated authentication response data and the auxiliary information for generating the shared key to the MME, or sending the generated authentication response data, the auxiliary information for generating the shared key and new auxiliary information for generating the next-level key to the MME,
wherein the authentication response data is used for mutual authentication between the MME and the other MTC devices, such that said other MTC devices generate the shared key or generate the shared key and the next-level key respectively according to the received auxiliary information for the shared key or according to the auxiliary information for the shared key and the new auxiliary information for the next-level key after the authentication is completed.

8. A Home Subscriber Server, HSS, **characterized in that** the HSS comprising: a sending/receiving unit (601) and a determining and processing unit (602), wherein
the sending/receiving unit (601) is configured to receive authentication data request information, send authentication response data generated by the determining and processing unit (602) and auxiliary information for generating the shared key to a Mobility Management Entity, MME, and send, to an MTC Inter Working Function, MTC-IWF, entity, Machine Type Communication, MTC, device group identification information and the shared key that are generated by the determining and processing unit (602); and
the determining and processing unit (602) is configured to check whether an MTC device belongs to the MTC device group, and generate, when the MTC device is determined to belong to the MTC device group, the authentication response data and the shared key between the MTC device and an MTC-IWF entity,
wherein the authentication data request information is sent by the MME after receiving attachment request information sent by the MTC device, the authentication response data is used for mutual authentication between the MME and the MTC device, such that the MTC device generates the shared key between the MTC device and the MTC-IWF entity according to the received auxiliary information for generating the shared key after the authentication is completed.

9. A system for establishing a secure small data transmission connection for a Machine Type Communication, MTC, device group, **characterized in that** the system comprising: an MTC device, a Mobility Management Entity, MME, a Home Subscriber Server, HSS, and an MTC Inter Working Function, MTC-IWF, entity,
wherein the MTC device comprises: a sending/receiving unit (701) configured to send attachment request information to the MME; and a key negotiation unit (702) configured to perform mutual authentication with the MME, and generate a shared key between the MTC device and the MTC-IWF entity according to received auxiliary information for the shared key after authentication is completed;
the MME comprises: a sending/receiving unit (711) configured to send authentication data request information to the HSS, and receive authentication response data and auxiliary information for generating the shared key; and a key negotiation unit (712) configured to perform mutual authentication with the MTC device;
the HSS comprises: a sending/receiving unit (601) and a determining and processing unit (602), the sending/receiving unit (601) being configured to receive authentication data request information, send the authentication response data generated by the determining and processing unit (602) and the auxiliary information for generating the shared key to the MME, and send, to the MTC-IWF entity, MTC device group identification information and the shared key that are generated by the determining and processing unit (602),
the determining and processing unit (602) being configured to check whether the MTC device belongs to the MTC device group, and generate, when the MTC device is determined to belong to the MTC device group, the authentication response data and the shared key between the MTC device and an MTC-IWF entity; and
the MTC-IWF entity comprises a sending/receiving unit (721) configured to receive the MTC device group identification information and the shared key that are sent by the HSS.

## Patentansprüche

1. Verfahren zur Herstellung einer Verbindung zur sicheren Übertragung kleiner Daten für eine Maschinenkommunikations, MTC,-Vorrichtungsgruppe, **dadurch gekennzeichnet, dass** das Verfahren umfasst:
Prüfen nach Empfang von Authentisierungsdaten-Anforderungsinformationen durch einen Heimat-Teilnehmerserver, HSS, (101), ob eine MTC-Vorrichtung zur MTC-Vorrichtungsgruppe gehört, und Erzeugen, wenn die MTC-Vorrichtung zur MTC-Vorrichtungsgruppe gehört, von Authentisierungsantwortdaten und eines gemeinsamen Schlüssels zwischen der MTC-Vorrichtung und einer Instanz mit MTC-Anpassungsfunktion, MTC-IWF, (102), wobei die Authentisierungsdaten-Anforderungsinformationen durch eine Mobilitätsverwaltungsinstanz, MME, nach Empfang von Anschlussanforderungsinformationen gesendet werden, die durch die MTC-Vorrichtung gesendet werden; und
Senden durch den HSS der Authentisierungsantwortdaten und von Hilfsinformationen zum Erzeugen des gemeinsamen Schlüssels an die MME und Senden von MTC-Vorrichtungsgruppen-Identifikationsinformationen und des gemeinsamen Schlüssels an die MTC-IWF-Instanz (103), wobei die Authentisierungsantwortdaten zur gegenseitigen Authentisierung zwischen der MME und der MTC-Vorrichtung verwendet werden (205), derart dass die MTC-Vorrichtung den gemeinsamen Schlüssel zwischen der MTC-Vorrichtung und der MTC-IWF-Instanz gemäß den empfangenen Hilfsinformationen zum Erzeugen des gemeinsamen Schlüssels nach Abschluss der Authentisierung erzeugt (206).

2. Verfahren nach Anspruch 1, ferner umfassend: Vorspeichern durch den HSS vor der Herstellung der Verbindung zur sicheren Übertragung kleiner Daten für die MTC-Vorrichtungsgruppe von MTC-Vorrichtungsinformationen über eine MTC-Vorrichtung und der MTC-Vorrichtungsgruppeninformationen über die MTC-Vorrichtungsgruppe, zu der die MTC-Vorrichtung gehört; oder
ferner umfassend: Senden durch den HSS vor der Herstellung der Verbindung zur sicheren Übertragung kleiner Daten für die MTC-Vorrichtungsgruppe der MTC-Vorrichtungsinformationen an jede MTC-Vorrichtung, die in der MTC-Vorrichtungsgruppe enthalten ist,
wobei die MTC-Vorrichtungsgruppeninformationen umfassen: MTC-Vorrichtungsgruppen-Identifikationsinformationen und MTC-Vorrichtungsgruppen-Schlüsselinformationen; wobei die MTC-Vorrichtungsinformationen Benutzerkennungsinformationen über eine MTC-Vorrichtung umfassen, oder ferner MTC-Vorrichtungskennungsinformationen umfassen, oder ferner Informationen über eine MTC-Vorrichtung hinsichtlich ihrer Fähigkeit zum Senden und Empfangen kleiner Daten umfassen.

3. Verfahren nach Anspruch 2, wobei das Senden der MTC-Vorrichtungsgruppeninformationen durch den HSS an jede MTC-Vorrichtung, die in der MTC-Vorrichtungsgruppe enthalten ist, umfasst:
Prüfen durch den HSS nach Empfang der Authentisierungsdaten-Anforderungsinformationen der MTC-Vorrichtungsgruppeninformationen über die MTC-Vorrichtungsgruppe, zu der die MTC-Vorrichtung gehört, gemäß den gespeicherten MTC-Vorrichtungsinformationen und Senden der MTC-Vorrichtungsgruppeninformationen und von Authentisierungsantwortdaten an die MME,
wobei die Authentisierungsdaten-Anforderungsinformationen durch die MME nach Empfang der durch die MTC-Vorrichtung gesendeten Anschlussanforderungsinformationen gesendet werden, und die Authentisierungsantwortdaten zur gegenseitigen Authentisierung zwischen der MME und der MTC-Vorrichtung verwendet werden, derart dass die MME die MTC-Vorrichtungsgruppeninformationen nach Abschluss der Authentisierung an die MTC-Vorrichtung sendet.

4. Verfahren nach Anspruch 2, wobei die Anschlussanforderungsinformationen umfassen: die MTC-Vorrichtungsinformationen über die MTC-Vorrichtung;
die Anschlussanforderungsinformationen ferner umfassen: die MTC-Vorrichtungsgruppen-Identifikationsinformationen über die MTC-Vorrichtungsgruppe, zu der die MTC-Vorrichtung gehört, und die Informationen über die MTC-Vorrichtung hinsichtlich ihrer Fähigkeit zum Senden und Empfangen kleiner Daten.

5. Verfahren nach Anspruch 2, wobei das Erzeugen des gemeinsamen Schlüssels zwischen der MTC-Vorrichtung und der MTC-IWF-Instanz durch den HSS umfasst:
Verarbeiten durch den HSS eines MTC-Vorrichtungsgruppenschlüssels in den MTC-Vorrichtungsgruppeninformationen gemäß einem Schlüsselerzeugungsalgorithmus und den Hilfsinformationen und Erzeugen des gemeinsamen Schlüssels zwischen der MTC-Vorrichtung und der MTC-IWF-Instanz.

6. Verfahren nach Anspruch 1, ferner umfassend: nach dem Erzeugen des gemeinsamen Schlüssels zwischen der MTC-Vorrichtung und der MTC-IWF-Instanz durch den HSS
Neuerzeugen durch den HSS eines Schlüssels der nächsten Stufe zum Schützen einer sicheren Übertragung kleiner Daten gemäß dem erzeugten gemeinsamen Schlüssel und neuen Hilfsinformationen, wobei der Schlüssel der nächsten Stufe umfasst: einen Schlüssel zur Verschlüsselung kleiner Daten und/oder einen Schlüssel zum Schutz der Integrität kleiner Daten.

7. Verfahren nach Anspruch 6, ferner umfassend: nach dem Senden der Authentisierungsantwortdaten durch den HSS an die MME
Senden durch den HSS des Schlüssels der nächsten Stufe zum Schützen einer sicheren Übertragung kleiner Daten an die MTC-IWF-Instanz, wobei die neuen Hilfsinformationen für die MTC-Vorrichtung zum Neuerzeugen eines Schlüssels der nächsten Stufe zum Schützen einer sicheren Übertragung kleiner Daten gemäß dem gemeinsamen Schlüssel nach Abschluss der Authentisierung konfiguriert sind; oder
wobei das Verfahren ferner umfasst: wenn andere MTC-Vorrichtungen außer der zuvor erwähnten MT-Vorrichtung in der MTC-Vorrichtungsgruppe kleine Daten senden müssen,
Bestimmen durch den HSS gemäß einem Lebenszyklus des erstellten gemeinsamen Schlüssels oder von Lebenszyklen des gemeinsamen Schlüssels und des Schlüssels der nächsten Stufe, ob es notwendig ist, einen gemeinsamen Schlüssel neu zu erzeugen oder einen gemeinsamen Schlüssel und einen Schlüssel der nächsten Stufe zu erzeugen, und Senden, falls nicht, durch den HSS der erzeugten Authentisierungsantwortdaten und der Hilfsinformationen zum Erzeugen des gemeinsamen Schlüssels an die MME oder Senden der erzeugten Authentisierungsantwortdaten, der Hilfsinformationen zum Erzeugen des gemeinsamen Schlüssels und der neuen Hilfsinformationen zum Erzeugen des Schlüssels der nächsten Stufe an die MME,
wobei die Authentisierungsantwortdaten zur gegenseitigen Authentisierung zwischen der MME und den anderen MTC-Vorrichtungen verwendet werden, derart dass die anderen MTC-Vorrichtungen den gemeinsamen Schlüssel erzeugen, oder den gemeinsamen Schlüssel und den Schlüssel der nächsten Stufe gemäß den empfangenen Hilfsinformationen für den gemeinsamen Schlüssel bzw. gemäß den Hilfsinformationen für den gemeinsamen Schlüssel und den neuen Hilfsinformationen für den Schlüssel der nächsten Stufe nach Abschluss der Authentisierung erzeugen.

8. Heimat-Teilnehmerserver, HSS, **dadurch gekennzeichnet, dass** der HSS umfasst: eine Sende-/Empfangseinheit (601) und eine Bestimmungs- und Verarbeitungseinheit (602), wobei
die Sende-/Empfangseinheit (601) so konfiguriert ist, dass sie Authentisierungsdaten-Anforderungsinformationen empfängt, Authentisierungsantwortdaten, die von der Bestimmungs- und Verarbeitungseinheit (602) erzeugt werden, und Hilfsinformationen zum Erzeugen des gemeinsamen Schlüssels an eine Mobilverwaltungsinstanz, MME, sendet und Maschinenkommunikations, MTC,-Vorrichtungsgruppen-Identifikationsinformationen und den gemeinsamen Schlüssel, die von der Bestimmungs- und Verarbeitungseinheit (602) erzeugt werden, an eine Instanz mit MTC-Anpassungsfunktion, MTC-IWF, sendet; und
die Bestimmungs- und Verarbeitungseinheit (602) so konfiguriert ist, dass sie prüft, ob eine MTC-Vorrichtung zur MTC-Vorrichtungsgruppe gehört, und, wenn bestimmt wird, dass die MTC-Vorrichtung zur MTC-Vorrichtungsgruppe gehört, die Authentisierungsantwortdaten und den gemeinsamen Schlüssel zwischen der MTC-Vorrichtung und einer MTC-IWF-Instanz erzeugt,
wobei die Authentisierungsdaten-Anforderungsinformationen durch die MME nach Empfang von durch die MTC-Vorrichtung gesendeten Anschlussanforderungsinformationen gesendet werden, die Authentisierungsantwortdaten zur gegenseitigen Authentisierung zwischen der MME und der MTC-Vorrichtung verwendet werden, derart dass die MTC-Vorrichtung den gemeinsamen Schlüssel zwischen der MTC-Vorrichtung und der MTC-IWF-Instanz gemäß den empfangenen Hilfsinformationen zum Erzeugen des gemeinsamen Schlüssels nach Abschluss der Authentisierung erzeugt.

9. System zum Herstellen einer Verbindung zur sicheren Übertragung kleiner Daten für eine Maschinenkommunikations, MTC-Vorrichtungsgruppe, **dadurch gekennzeichnet, dass** das System umfasst: eine MTC-Vorrichtung, eine Mobilitätsverwaltungsinstanz, MME, einen Heimat-Teilnehmerserver, HSS, und eine Instanz mit MTC-Anpassungsfunktion, MTC-IWF,
wobei die MTC-Vorrichtung umfasst: eine Sende-/Empfangseinheit (701), die zum Senden von Anschlussanforderungsinformationen an die MME konfiguriert ist; und eine Schlüsselaushandlungseinheit (702), die so konfiguriert ist, dass sie gegenseitige Authentisierung mit der MME durchführt und einen gemeinsamen Schlüssel zwischen der MTC-Vorrichtung und der MTC-IWF-Instanz gemäß empfangenen Hilfsinformationen für den gemeinsamen Schlüssel nach Abschluss der Authentisierung erzeugt;
die MME umfasst: eine Sende-/Empfangseinheit (711), die zum Senden von Authentisierungsdaten-Anforderungsinformationen an den HSS und Empfangen von Authentisierungsantwortdaten und Hilfsinformationen zum Erzeugen des gemeinsamen Schlüssels konfiguriert ist; und eine Schlüsselaushandlungseinheit (712), die zum Durchführen gegenseitiger Authentisierung mit der MTC-Vorrichtung konfiguriert ist;
der HSS umfasst: eine Sende-/Empfangseinheit (601) und eine Bestimmungs- und Verarbeitungseinheit (602), wobei die Sende-Empfangseinheit (601) so konfiguriert ist, dass sie Authentisierungsdaten-Anforderungsinformationen empfängt, Authentisierungsantwortdaten, die von der Bestimmungs- und Verarbeitungseinheit (602) erzeugt werden, und die Hilfsinformationen zum Erzeugen des gemeinsamen Schlüssels an die MME sendet, und MTC-Vorrichtungsgruppen-Identifikationsinformationen und den gemeinsamen Schlüssel, die von der Bestimmungs- und Verarbeitungseinheit (602) erzeugt werden, an die MTC-IWF-Instanz sendet,
die Bestimmungs- und Verarbeitungseinheit (602) so konfiguriert ist, dass sie prüft, ob die MTC-Vorrichtung zur MTC-Vorrichtungsgruppe gehört, und, wenn bestimmt wird, dass die MTC-Vorrichtung zur MTC-Vorrichtungsgruppe gehört, die Authentisierungsantwortdaten und den gemeinsamen Schlüssel zwischen der MT-Vorrichtung und einer MTC-IWF-Instanz erzeugt; und
die MTC-IWF-Instanz eine Sende-/Empfangseinheit (721) umfasst, die so konfiguriert ist, dass sie die MTC-Vorrichtungsgruppen-Identifikationsinformationen und den gemeinsamen Schlüssel empfängt, die durch den HSS gesendet werden.

## Revendications

1. Procédé d'établissement d'une connexion de transmission sécurisée de données de petite taille pour un groupe de dispositifs de communication de type machine, MTC, **caractérisé en ce que** le procédé comprend les étapes ci-dessous consistant à :
vérifier, après qu'un serveur d'abonné résidentiel, HSS, a reçu des informations de demande de données d'authentification (101), si un dispositif de communication MTC appartient au groupe de dispositifs de communication MTC, et générer, lorsqu'il est déterminé que le dispositif de communication MTC appartient au groupe de dispositifs de communication MTC, des données de réponse d'authentification et une clé partagée entre le dispositif de communication MTC et une entité de fonction d'interfonctionnement de communication MTC, MTC-IWF, (102), dans lequel les informations de demande de données d'authentification sont envoyées par une entité de gestion de la mobilité, MME, suite à la réception d'informations de demande de rattachement envoyées par le dispositif de communication MTC ; et
envoyer, par le biais du serveur HSS, les données de réponse d'authentification et des informations auxiliaires pour générer la clé partagée, à l'entité MME, et envoyer des informations d'identification de groupe de dispositifs de communication MTC et la clé partagée à l'entité de fonction MTC-IWF (103), dans lequel les données de réponse d'authentification sont utilisées pour une authentification mutuelle entre l'entité MME et le dispositif de communication MTC (205), de sorte que le dispositif de communication MTC génère la clé partagée entre le dispositif de communication MTC et l'entité de fonction MTC-IWF selon les informations auxiliaires reçues pour générer la clé partagée suite à l'achèvement de l'authentification (206).

2. Procédé selon la revendication 1, comprenant en outre l'étape ci-après consistant à : avant que la connexion de transmission sécurisée de données de petite taille ne soit établie pour le groupe de dispositifs de communication MTC, pré-stocker, par le biais du serveur HSS, des informations de dispositif de communication MTC concernant un dispositif de communication MTC, et des informations de groupe de dispositifs de communication MTC concernant le groupe de dispositifs de communication MTC auquel appartient le dispositif de communication MTC ; ou
comprenant en outre l'étape ci-après consistant à : avant que la connexion de transmission sécurisée de données de petite taille ne soit établie pour le groupe de dispositifs de communication MTC, envoyer, par le biais du serveur HSS, les informations de groupe de dispositifs de communication MTC à chaque dispositif de communication MTC inclus dans le groupe de dispositifs de communication MTC ;
dans lequel les informations de groupe de dispositifs de communication MTC comprennent : des informations d'identification de groupe de dispositifs de communication MTC et des informations de clé de groupe de dispositifs de communication MTC ; les informations de dispositif de communication MTC comprennent des informations d'identité d'utilisateur concernant un dispositif de communication MTC, ou comprennent en outre des informations d'identité de dispositif de communication MTC, ou comprennent en outre des informations de capacité d'émission et de réception de données de petite taille concernant un dispositif de communication MTC.

3. Procédé selon la revendication 2, dans lequel l'étape d'envoi, par le biais du serveur HSS, des informations de groupe de dispositifs de communication MTC à chaque dispositif de communication MTC inclus dans le groupe de dispositifs de communication MTC comprend les étapes ci-dessous consistant à :
vérifier, par le biais du serveur HSS, suite à la réception des informations de demande de données d'authentification, les informations de groupe de dispositifs de communication MTC concernant le groupe de dispositifs de communication MTC auquel appartient le dispositif de communication MTC selon les informations de dispositifs de communication MTC stockées, et envoyer les informations de groupe de dispositifs de communication MTC et les données de réponse d'authentification à l'entité MME ;
dans lequel les informations de demande de données d'authentification sont envoyées par l'entité MME suite à la réception des informations de demande de rattachement envoyées par le dispositif de communication MTC, et les données de réponse d'authentification sont utilisées pour une authentification mutuelle entre l'entité MME et le dispositif de communication MTC, de sorte que l'entité MME envoie les informations de groupe de dispositifs de communication MTC au dispositif de communication MTC suite à l'achèvement de l'authentification.

4. Procédé selon la revendication 2, dans lequel les informations de demande de rattachement comprennent : les informations de dispositif de communication MTC concernant le dispositif de communication MTC ;
les informations de demande de rattachement comprennent en outre : les informations d'identification de groupe de dispositifs de communication MTC concernant le groupe de dispositifs de communication MTC auquel appartient le dispositif de communication MTC, ainsi que les informations de capacité d'émission et réception de données de petite taille concernant le dispositif de communication MTC.

5. Procédé selon la revendication 2, dans lequel l'étape de génération, par le biais du serveur HSS, de la clé partagée entre le dispositif de communication MTC et l'entité de fonction MTC-IWF comprend les étapes ci-dessous consistant à :
traiter, par le biais du serveur HSS, une clé de groupe de dispositifs de communication MTC dans les informations de groupe de dispositifs de communication MTC, selon un algorithme de génération de clés et les informations auxiliaires, et générer la clé partagée entre le dispositif de communication MTC et l'entité de fonction MTC-IWF.

6. Procédé selon la revendication 1, comprenant en outre l'étape ci-dessous consistant à : après que le serveur HSS génère la clé partagée entre le dispositif de communication MTC et l'entité de fonction MTC-IWF :
générer à nouveau, par le biais du serveur HSS, une clé de niveau successif pour protéger la transmission sécurisée de données de petite taille selon la clé partagée générée et de nouvelles informations auxiliaires, dans lequel la clé de niveau successif comprend : une clé de chiffrement de données de petite taille et/ou une clé de protection d'intégrité de données de petite taille.

7. Procédé selon la revendication 6, comprenant en outre l'étape ci-dessous consistant à : après que le serveur HSS envoie les données de réponse d'authentification à l'entité MME :
envoyer, par le biais du serveur HSS, la clé de niveau successif pour protéger la transmission sécurisée de données de petite taille, à l'entité de fonction MTC-IWF, dans lequel les nouvelles informations auxiliaires sont configurées de manière à permettre au dispositif de communication MTC de générer à nouveau, selon la clé partagée, suite à l'achèvement de l'authentification, une clé de niveau successif pour protéger la transmission sécurisée de données de petite taille ; ou
le procédé comprenant en outre l'étape ci-dessous consistant à : lorsque d'autres dispositifs de communication MTC, à l'exception du dispositif de communication MTC susmentionné, dans le groupe de dispositifs de communication MTC, doivent envoyer des données de petite taille :
déterminer, par le biais du serveur HSS, selon un cycle de vie de la clé partagée établie ou selon des cycles de vie de la clé partagée et de la clé de niveau successif, s'il est nécessaire de générer à nouveau une clé partagée ou de générer une clé partagée et une clé de niveau successif, et dans la négative, envoyer, par le biais du serveur HSS, les données de réponse d'authentification générées et les informations auxiliaires pour générer la clé partagée, à l'entité MME, ou envoyer les données de réponse d'authentification générées, les informations auxiliaires pour générer la clé partagée, et de nouvelles informations auxiliaires pour générer le clé de niveau successif, à l'entité MME ;
dans lequel les données de réponse d'authentification sont utilisées pour une authentification mutuelle entre l'entité MME et les autres dispositifs de communication MTC, de sorte que lesdits autres dispositifs de communication MTC génèrent la clé partagée ou génèrent la clé partagée et la clé de niveau successif, respectivement, selon les informations auxiliaires reçues pour la clé partagée, ou selon les informations auxiliaires pour la clé partagée et les nouvelles informations auxiliaires pour la clé de niveau successif suite à l'achèvement de l'authentification.

8. Serveur d'abonné résidentiel, HSS, **caractérisé en ce que** le serveur HSS comprend : une unité d'émission/réception (601) et une unité de détermination et de traitement (602), dans lesquelles :
l'unité d'émission/réception (601) est configurée de manière à recevoir des informations de demande de données d'authentification, à envoyer des données de réponse d'authentification générées par l'unité de détermination et de traitement (602) et des informations auxiliaires pour générer la clé partagée, à une entité de gestion de la mobilité, MME, et à envoyer, à une entité de fonction d'interfonctionnement de communication MTC, MTC-IWF, des informations d'identification de groupe de dispositifs de communication de type machine, MTC, et la clé partagée, lesquelles sont générées par l'unité de détermination et de traitement (602) ; et
l'unité de détermination et de traitement (602) est configurée de manière à vérifier si un dispositif de communication MTC appartient au groupe de dispositifs de communication MTC, et à générer, lorsqu'il est déterminé que le dispositif de communication MTC appartient au groupe de dispositifs de communication MTC, les données de réponse d'authentification et la clé partagée entre le dispositif de communication MTC et une entité de fonction MTC-IWF ;
dans lequel les informations de demande de données d'authentification sont envoyées par l'entité MME suite à la réception d'informations de demande de rattachement envoyées par le dispositif de communication MTC, les données de réponse d'authentification étant utilisées pour une authentification mutuelle entre l'entité MME et le dispositif de communication MTC, de sorte que le dispositif de communication MTC génère la clé partagée entre le dispositif de communication MTC et l'entité de fonction MTC-IWF selon les informations auxiliaires reçues pour générer la clé partagée suite à l'achèvement de l'authentification.

9. Système destiné à établir une connexion de transmission sécurisée de données de petite taille pour un groupe de dispositifs de communication de type machine, MTC, **caractérisé en ce que** le système comprend : un dispositif de communication MTC, une entité de gestion de la mobilité, MME, un serveur d'abonné résidentiel, HSS, et une entité de fonction d'interfonctionnement de communication MTC, MTC-IWF ;
dans lequel le dispositif de communication MTC comprend : une unité d'émission/réception (701) configurée de manière à envoyer des informations de demande de rattachement à l'entité MME ; et une unité de négociation de clé (702) configurée de manière à mettre en oeuvre une authentification mutuelle avec l'entité MME, et à générer une clé partagée entre le dispositif de communication MTC et l'entité de fonction MTC-IWF selon des informations auxiliaires reçues pour la clé partagée, suite à l'achèvement de l'authentification ;
l'entité MME comprend : une unité d'émission/réception (711) configurée de manière à envoyer des informations de demande de données d'authentification au serveur HSS, et à recevoir des données de réponse d'authentification et des informations auxiliaires pour générer la clé partagée ; et une unité de négociation de clé (712) configurée de manière à mettre en oeuvre une authentification mutuelle avec le dispositif de communication MTC ;
le serveur HSS comprend : une unité d'émission/réception (601) et une unité de détermination et de traitement (602), l'unité d'émission/réception (601) étant configurée de manière à recevoir des informations de demande de données d'authentification, à envoyer les données de réponse d'authentification générées par l'unité de détermination et de traitement (602) et les informations auxiliaires pour générer la clé partagée, à l'entité MME, et à envoyer, à l'entité de fonction MTC-IWF, les informations d'identification de groupe de dispositifs de communication MTC et la clé partagée lesquelles sont générées par l'unité de détermination et de traitement (602) ;
l'unité de détermination et de traitement (602) étant configurée de manière à vérifier si le dispositif de communication MTC appartient au groupe de dispositifs de communication MTC, et à générer, lorsqu'il est déterminé que le dispositif de communication MTC appartient au groupe de dispositifs de communication MTC, les données de réponse d'authentification et la clé partagée entre le dispositif de communication MTC et une entité de fonction MTC-IWF ; et
l'entité de fonction MTC-IWF comprend une unité d'émission/réception (721) configurée de manière à recevoir les informations d'identification de groupe de dispositifs de communication MTC et la clé partagée lesquelles sont envoyées par le serveur HSS.
